# FASCICULE DE BREVET EUROPEEN

(11) **EP 1 864 838 B1**
(45) Date de publication et mention de la délivrance du brevet: **19.10.2011**
(21) Numéro de dépôt: 07290701.7
(22) Date de dépôt: 06.06.2007
(51) Int. Cl.: B60H 1/00

(54) **Dispositif réducteur de bruit pour circuit de climatisation de véhicule automobile, conduite et ce circuit l'incorporant**
Vorrichtung zur Lärmdämmung für einen Klimaanlagenschaltkreis eines Kraftfahrzeugs, Leitung und dieser Schaltkreis, der sie umfasst
Noise-reduction device for automobile air-conditioning circuit, conduit and circuit comprising same

(30) Priorité: 06.06.2006 FR 0604986
(43) Date de publication de la demande: 12.12.2007
(73) Titulaire: Hutchinson, 75008 Paris (FR)
(72) Inventeur: Parodat, Pierre-Axel, 45700 Mormant/Vernisson (FR); Binter, Christophe, 45290 Nogent/Vernisson (FR); Herault, Florence, 77690 Montigny sur Loing (FR)
(74) Mandataire: Bolinches, Michel Jean-Marie

(56) Documents cités:
- EP-A1- 1 279 911
- US-A- 5 521 340
- US-A1- 2006 006 645

## Description

La présente invention concerne une conduite pour fluide frigorigène gazeux ou supercritique et sous pression d'un circuit de climatisation pour véhicule automobile dans laquelle est inséré un dispositif réducteur de bruit, et un circuit de climatisation incorporant cette conduite.

D'une manière générale, un dispositif réducteur de bruit pour circuit de climatisation d'un véhicule automobile est formé d'une capacité acoustique qui est montée en ligne dans une canalisation de ce circuit entre un compresseur et un évaporateur, de sorte à atténuer la transmission des ondes sonores générées principalement par le compresseur et se propageant dans le fluide frigorigène à l'intérieur de la conduite, via un élargissement brusque de la section de passage du fluide pénétrant dans cette capacité. En effet, cet élargissement de la section de passage à l'entrée dans la capacité se traduit de manière connue par la création d'une onde sonore en opposition de phase s'additionnant à l'onde perturbatrice pour générer une onde atténuée d'amplitude plus réduite.

Une telle capacité acoustique est usuellement située à un emplacement de la canalisation du circuit de climatisation qui est relativement éloigné du compresseur, essentiellement à cause du volume qu'occupe cette capacité et de la place qui fait souvent défaut dans le groupe motopropulseur du véhicule automobile comprenant ce compresseur, pour installer la capacité à proximité immédiate de ce dernier et, dans les cas où cette installation de la capacité à proximité immédiate du compresseur serait néanmoins envisageable, à cause des vibrations mécaniques indésirables qui sont générées par la présence de la masse additionnelle formée par cette capacité et qui peuvent être une source de rupture de la canalisation correspondante.

Cet éloignement relatif de la capacité acoustique vis-à-vis du compresseur a notamment pour effet de générer une zone de résonance entre ces deux éléments, dans laquelle le bruit peut s'autoalimenter. Il en résulte que l'atténuation du bruit dans la canalisation du circuit de climatisation est encore perfectible.

Ces capacités acoustiques permettent ainsi d'atténuer dans une certaine mesure le bruit généré par le compresseur et se propageant dans la canalisation du circuit de climatisation. Cependant, elles présentent en même temps l'inconvénient de générer des pertes de charge significatives pour le fluide les traversant, du fait de la modification brusque de la section de passage qui les caractérise. En outre, elles présentent un coût de fabrication et d'implantation sur la canalisation du circuit de climatisation qui est relativement élevé.

Le document WO-A-2005/035949, qui est considéré comme l'art antérieur le plus proche, présente un dispositif réducteur de bruit pour une canalisation d'un tel circuit de climatisation qui, contrairement à la capacité précitée qui est montée en ligne de sorte à élargir la section de passage pour le fluide frigorigène, est ici destiné à être inséré à l'intérieur de cette canalisation. Ce dispositif est spécifiquement conçu pour diviser le fluide le traversant axialement, d'une part, en un flux principal dans un canal central s'étendant axialement d'une extrémité à l'autre du dispositif et, d'autre part, en un flux secondaire en hélice s'étendant radialement à l'extérieur de ce canal central entre ces deux extrémités via une rampe hélicoïdale formée autour de la paroi de ce canal suivant un pas déterminé.

Ce dispositif présente ainsi une face radialement externe de contact avec la canalisation qui n'est pas en forme de cylindre mais d'hélice, de sorte à engendrer, via le flux secondaire généré par cette rampe, une onde en opposition de phase avec l'onde principale générant la perturbation sonore et s'additionnant à cette dernière pour l'obtention d'une onde résultante d'amplitude réduite.

Outre sa géométrie complexe, un inconvénient majeur de ce dispositif réside notamment, en principe, dans la limitation d'efficacité à quelques fréquences particulières qui sont des multiples de la différence acoustique entre les deux flux ainsi créés.

Un but de la présente invention est de proposer une conduite pour fluide frigorigène gazeux ou supercritique et sous pression d'un circuit de climatisation pour véhicule automobile, ladite conduite étant pourvue dans son espace interne d'un dispositif réducteur de bruit qui est monté au contact de la paroi de ladite conduite et qui présente une géométrie au moins en partie tubulaire délimitée par deux faces transversales respectivement d'entrée et de sortie du fluide formant entre elles au moins un canal axial de passage du fluide dans le dispositif et par une face radialement externe reliant ces faces d'entrée et de sortie entre elles, qui permette de remédier à cet inconvénient tout en procurant notamment une atténuation acoustique satisfaisante dans ledit circuit.

A cet effet, une conduite selon l'invention est telle que ladite face externe du dispositif est au moins en partie cylindrique et épouse ladite paroi de conduite, le ratio entre la section de passage minimale dudit canal ou de l'ensemble desdits canaux et la section transversale minimale de ladite face externe étant compris entre 0,05 et 0,75 et, de préférence, entre 0,20 et 0,50.

Dans le cas de plusieurs canaux axiaux formés à l'intérieur du dispositif selon l'invention, il convient de noter que ces canaux sont alors prévus sensiblement parallèles entre eux, pouvant être respectivement formés dans la masse dudit dispositif par une pluralité de lumières traversantes qui débouchent toutes sur lesdites faces d'entrée et de sortie.

On notera que ce dispositif de l'invention est adapté pour être monté au contact de la conduite dans laquelle il est inséré par sa face externe au moins en partie cylindrique et ainsi former un unique flux de fluide frigorigène en son centre ou bien des flux axiaux sensiblement identiques de ce fluide dans lesdits canaux, contrairement au dispositif du document précité dont la face externe hélicoïdale génère un flux secondaire pour ledit fluide qui diffère du flux principal.

On notera également que les valeurs précitées pour le ratio des aires caractérisant le dispositif de l'invention permettent de procurer une atténuation acoustique satisfaisante au sein dudit circuit dans une large plage de fréquences sonores pouvant aller de 50 Hz à 4000 Hz, via le rétrécissement significatif de la section de passage qu'elles représentent, cette atténuation étant en outre optimale lorsque ledit dispositif est installé directement contre le compresseur du circuit de climatisation (i.e. directement à l'aspiration ou entrée de ce compresseur).

Selon une caractéristique importante de l'invention, il convient de noter que ledit dispositif présente une structure qui permet de l'insérer à une extrémité de ladite conduite qui est située à proximité immédiate du compresseur, de telle sorte que l'atténuation acoustique s'en trouve améliorée, contrairement aux capacités acoustiques de l'art antérieur que l'on monte usuellement à distance dudit compresseur pour les raisons exposées ci-dessus.

On notera en outre que ce rétrécissement de la section de passage pour ledit fluide qui caractérise notamment le dispositif de l'invention se réfère à une section de passage dudit canal ou de l'ensemble desdits canaux qui apparaît comme étant minimale sur la longueur axiale totale du dispositif, i.e. dont l'aire est la plus réduite sur cette longueur (il ne s'agit donc pas d'une section de passage moyenne), et à une section transversale de ladite face externe qui est également minimale sur cette longueur axiale (indépendamment de la zone où ladite section de passage est minimale).

Selon une autre caractéristique de l'invention, ledit ou chaque canal est délimité par une face radialement interne dudit dispositif qui présente une section transversale de géométrie régulière ou non dans la direction axiale (e.g. de type polygonale, épicycloïdale, elliptique ou circulaire) et qui s'étend de l'une desdites faces d'entrée et de sortie à l'autre.

On notera que dans le cas de plusieurs canaux, ces derniers peuvent présenter des géométries identiques ou différentes, pourvu qu'ils soient sensiblement parallèles.

D'une manière générale, on notera que ladite face radialement externe du dispositif et ladite face radialement interne dudit ou chaque canal peuvent chacune être lisses ou bien présenter des microrugosités (i.e. microreliefs).

Avantageusement, ladite face interne peut comprendre :
- au moins un tronçon axial cylindrique (i.e. de section transversale constante) entre lesdites faces d'entrée et de sortie, et/ou
- au moins un tronçon axial convergent et/ou au moins un tronçon axial divergent débouchant sur ladite face d'entrée et/ou de sortie, respectivement, dans un sens de passage déterminé du fluide dans ce ou chaque canal.

Par « convergent » et « divergent », on entend dans la présente description tout rétrécissement et élargissement de section de passage, respectivement, conférant au tronçon considéré une géométrie par exemple tronconique ou sensiblement en forme d'hyperboloïde de révolution.

En d'autres termes, le dispositif de l'invention peut comprendre une face radialement interne qui est par exemple constituée :
- d'un unique tronçon axial cylindrique ou d'une pluralité de tronçons axiaux tous cylindriques, ou
- d'un unique tronçon axial convergent ou divergent, de ladite face d'entrée à ladite face de sortie pour le fluide frigorigène, ou bien
- d'une combinaison d'un tronçon cylindrique et d'un ou de tronçon(s) de section transversale variable (i.e. convergent et/ou divergent).

On notera que l'adjonction de ce(s) tronçon(s) de section transversale variable pour ladite face interne permet avantageusement de réduire les pertes de charges lors de l'écoulement du fluide frigorigène dans ladite conduite, pertes de charges qui sont inhérentes au rétrécissement de la section de passage pour ledit fluide du fait du ratio précité.

Le dispositif selon l'invention incorporant ce(s) tronçon(s) de section transversale variable permet ainsi non seulement de réduire d'une manière significative les bruits pulsatoires générés à l'intérieur du circuit de climatisation, grâce au rétrécissement précité dudit canal ou de l'ensemble desdits canaux à l'emplacement de sa section de passage minimale que traduit ledit ratio, mais encore de minimiser les pertes de charges induites précisément par ce rétrécissement, grâce à la présente de ce(s) tronçon(s) de section transversale variable dans ledit canal ou l'ensemble desdits canaux.

Selon un exemple préférentiel de réalisation de l'invention, ladite face interne comprend successivement, de ladite face d'entrée à ladite face de sortie, un premier tronçon axial convergent, un second tronçon axial cylindrique et un troisième tronçon axial divergent, la longueur dudit premier tronçon étant réduite en comparaison de celles desdits second et troisième tronçons.

On notera que ces premier et troisième tronçons présentant chacun une section transversale variable permettent de minimiser encore les pertes de charge à travers ledit dispositif.

Selon une autre caractéristique de l'invention, ledit dispositif peut comporter, à proximité de ladite face de sortie, une collerette qui définit une section transversale élargie pour ladite face externe et qui est montée au contact d'une extrémité correspondante de ladite conduite, ladite collerette présentant une face externe cylindrique et pouvant se terminer par une embase transversale formant ladite face de sortie dudit dispositif.

Selon un mode de réalisation de l'invention, ladite face d'entrée et/ou ladite face de sortie sont chacune pourvues d'une unique ouverture formant une extrémité correspondante dudit ou chaque canal.

En variante, ladite face d'entrée et/ou ladite face de sortie peuvent être chacune pourvues d'une pluralité d'ouvertures sur lesquelles débouche ledit ou chaque canal.

Avantageusement, la section de passage minimale du canal ou de l'ensemble desdits canaux peut présenter une aire comprise entre 4,9 mm² et 79 mm², et la section transversale minimale de ladite face externe peut présenter une aire comprise entre 26,4 mm² et 201 mm².

Egalement avantageusement, ledit dispositif peut présenter une longueur axiale comprise entre 25 mm et 150 mm.

Concernant le matériau utilisé pour réaliser ledit dispositif, on notera qu'il peut s'agir d'une manière générale de tout matériau apte à constituer une conduite pour fluide frigorigène sous pression et que, à titre non limitatif, tout matériau de type plastique (e.g. un polyamide), caoutchouc ou même métallique.

Selon une autre caractéristique avantageuse de l'invention, ledit dispositif peut être à base d'un matériau déformable, tel qu'un caoutchouc, pour épouser une forme coudée ou cintrée de ladite conduite.

Selon une autre caractéristique de l'invention, le ratio entre la section de passage minimale dudit canal ou de l'ensemble desdits canaux et la section transversale interne minimale de ladite paroi de conduite est avantageusement compris entre 0,05 et 0,60 et, de préférence, entre 0,20 et 0,50.

Un circuit de climatisation selon l'invention pour véhicule automobile est du type comportant :
- des conduites destinées à véhiculer un fluide frigorigène gazeux sous pression entre un compresseur et un évaporateur, et
- un dispositif réducteur de bruit inséré dans au moins l'une de ces conduites dans laquelle est inséré ledit dispositif, cette conduite étant telle que définie ci-dessus en relation avec la présente invention.

Selon une autre caractéristique avantageuse de l'invention, ladite conduite dans laquelle est inséré ledit dispositif est raccordée directement à l'aspiration (i.e. l'entrée) ou au refoulement (i.e. la sortie) dudit compresseur, respectivement dans une ligne basse pression ou dans une ligne haute pression dudit circuit, et ledit dispositif peut être avantageusement monté à l'extrémité de ladite conduite qui débouche sur ladite aspiration ou sur ledit refoulement du compresseur, respectivement dans ladite ligne basse pression ou dans ladite ligne haute pression.

En d'autres termes, on notera que le dispositif de l'invention est utilisable tant dans une ligne basse pression que dans une ligne haute pression d'un tel circuit de climatisation.

On notera à nouveau que ce montage du dispositif de l'invention à proximité immédiate du compresseur permet d'atténuer de manière encore plus satisfaisante le bruit généré par ce dernier à l'intérieur du circuit de climatisation.

Le circuit de climatisation selon l'invention peut fonctionner dans les plages usuelles de température et de pression relatives au fluide frigorigène utilisé, i.e. par exemple à des pressions allant sensiblement de 2 bars à 25 bars pour du « R134a » et allant de plusieurs dizaines de bars à environ 150 bars pour du dioxyde de carbone.

On notera qu'un fluide frigorigène tel que le dioxyde de carbone peut être gazeux à l'aspiration du compresseur dans un tel circuit, alors qu'il peut être supercritique au refoulement de ce compresseur.

D'autres caractéristiques, avantages et détails de la présente invention ressortiront à la lecture de la description suivante d'exemples de réalisation de l'invention, donnés à titre illustratif et non limitatif, ladite description étant réalisée en référence avec les dessins joints, parmi lesquels :
la figure 1 est une vue schématique et en perspective d'un circuit de climatisation de l'état de l'art pour véhicule automobile, montrant notamment deux lignes basse pression et haute pression de fluide frigorigène gazeux ou supercritique,
la figure 2 est une vue en perspective d'un dispositif réducteur de bruit selon un premier mode de réalisation de l'invention,
la figure 3 est une vue en coupe longitudinale du dispositif selon la figure 2,
la figure 4 est une vue en perspective d'un dispositif réducteur de bruit selon un second mode de réalisation de l'invention,
les figures 5, 6 et 7 sont respectivement des vues en coupe longitudinale de trois exemples de réalisation selon l'invention du dispositif de la figure 4,
la figure 8 est une vue en perspective d'un dispositif réducteur de bruit selon un troisième mode de réalisation de l'invention,
les figures 9 et 10 sont respectivement deux vues en coupe longitudinale de deux exemples de réalisation de l'invention du dispositif de la figure 8, et
la figure 11 est un graphique illustrant les courbes d'atténuation acoustique C_{T}, C_{NC}, C_{I1}, C_{I2}, C_{I3} et C_{I4} respectivement mesurées dans un circuit de climatisation « témoin » dépourvu de dispositif réducteur de bruit, dans un circuit de climatisation non conforme à l'invention équipé d'une capacité acoustique de l'art antérieur, et dans quatre circuits de climatisation selon l'invention équipés chacun d'un dispositif réducteur de bruit selon l'invention.

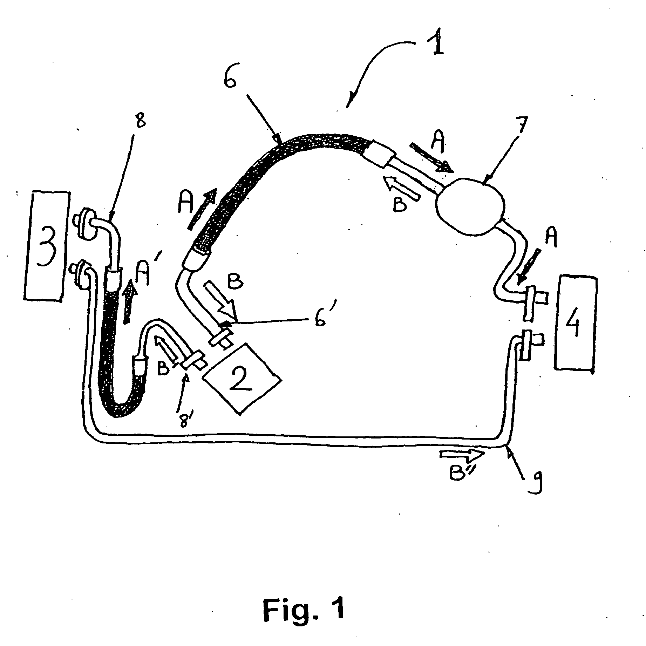

Le circuit de climatisation 1 illustré à la figure 1 est de manière connue un circuit fermé qui comprend plusieurs éléments répartis à l'intérieur du compartiment moteur du véhicule, notamment un compresseur 2, un condenseur ou refroidisseur 3, un réservoir déshydratant (non visible), un système de détente (non visible) et un évaporateur 4, et dans lequel circule un fluide frigorigène gazeux ou supercritique et sous pression (tel que du « R134a » ou du dioxyde de carbone, à titre non limitatif) ou bien un fluide liquide. Tous ces éléments sont reliés entre eux par des lignes rigides ou flexibles constitués par des portions tubulaires rigides et/ou souples, qui présentent en chacune de leurs extrémités des moyens de raccordement étanches.

Plus précisément, le circuit 1 comporte :
- une ligne basse pression 6, 6' destinée à véhiculer le fluide frigorigène gazeux entre le compresseur 2 et l'évaporateur 4, et un dispositif réducteur de bruit 7 de type capacité acoustique qui est monté en ligne dans une conduite 6 relativement éloignée du compresseur 2 (dans cette ligne 6, 6', les flèches A indiquent le sens de propagation du bruit généré par le compresseur 2 et les flèches B le sens de circulation du fluide qui est inverse du précédent) ;
- une ligne haute pression 8, 8' pour le fluide frigorigène gazeux ou supercritique qui est raccordée au compresseur 2 et au condenseur 3 (dans cette ligne 8, 8', la flèche A' indique le sens de propagation du bruit généré par le compresseur 2 et la flèche B' le sens de circulation du fluide qui est le même que le précédent) ; et
- une ligne haute pression liquide 9 qui est raccordée au condenseur 3 et à l'évaporateur 4 (dans cette ligne 9, la flèche B" indique le sens de circulation dudit fluide liquide).

Comme cela est visible à la figure 1, la capacité acoustique 7 de la ligne basse pression 6, 6' comporte, dans cet exemple de réalisation, deux ouvertures respectivement d'entrée et de sortie pour le fluide frigorigène, et l'élargissement de la section de passage pour le fluide qui la caractérise permet d'atténuer les ondes sonores générées par le compresseur 2 et se propageant le long de cette ligne 6, 6'. En contrepartie, cette capacité 7 présente l'inconvénient connu de générer des pertes de charge lors de sa traversée par le fluide.

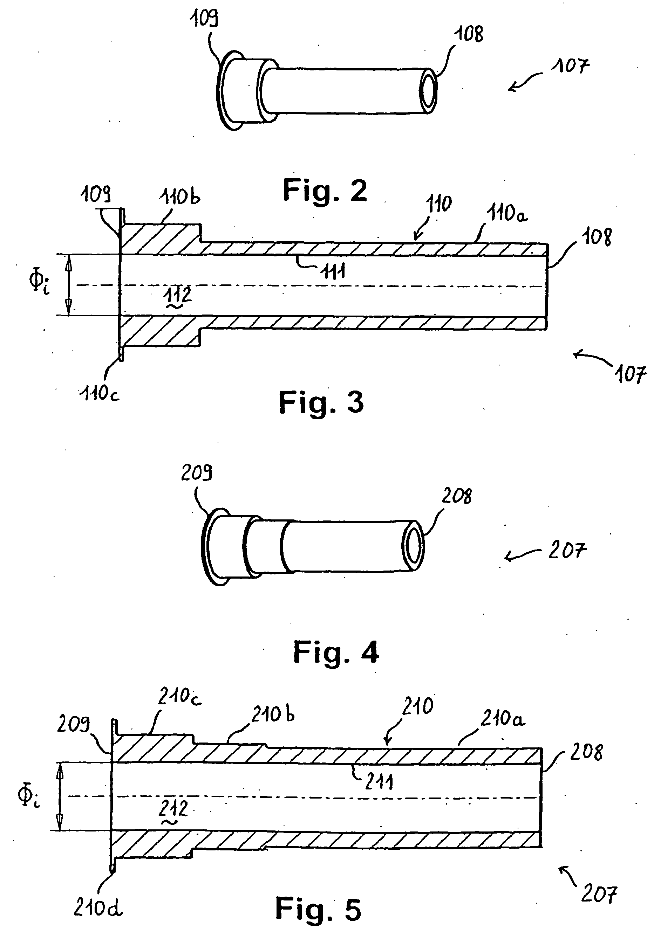

Le dispositif réducteur de bruit 107 selon le premier mode de réalisation de l'invention qui est illustré aux figures 2 et 3 présente une géométrie globalement tubulaire délimitée axialement par deux faces ouvertes d'entrée 108 et de sortie 109 pour le fluide, et il est avantageusement monté à une extrémité de la conduite 6' de la ligne basse pression 6, 6' qui est raccordée au compresseur 2, de sorte que le dispositif 107 soit monté directement à l'aspiration de ce compresseur 2, ou bien à une extrémité de la conduite 8' de la ligne haute pression 8, 8' qui est raccordée au compresseur 2, de sorte que le dispositif 107 soit monté directement sur le refoulement de ce compresseur 2.

Ce dispositif 107 présente :
- une face externe 110 qui est adaptée pour être montée au contact de la face interne de la conduite 6' et qui, de la face d'entrée 108 à la face de sortie 109 (laquelle présente un diamètre externe supérieur à celui de la face d'entrée 108), comprend une portion cylindrique 110a se prolongeant par une collerette 110b, elle-même se terminant par une embase ouverte 110c définissant la face de sortie 109 de cette conduite 6' ; et
- une face interne 111 cylindrique définissant un canal axial 112 pour le passage du fluide, avec un ratio R [section de passage minimale du canal 112 / section transversale de la portion 110a] égal à 0,50.

Dans ce qui suit, les références numériques des éléments illustrés des dispositifs 207 à 607 qui présentent une structure et/ou une fonction identiques ou analogues à celles des éléments des figures 2 et 3 ont été successivement augmentées de 100.

Le dispositif réducteur de bruit 207 selon le premier exemple du second mode de réalisation de l'invention qui est illustré aux figures 4 et 5 se différencie uniquement du dispositif 107 précité, en ce que sa face externe 210 comprend, de sa face d'entrée 208 à sa face de sortie 209, une première portion cylindrique 210a se prolongeant par une seconde portion cylindrique 210b de diamètre légèrement supérieur et de longueur plus réduite que la portion 210a, cette seconde portion 210b se terminant par une collerette 210c et une embase 210c identiques à celles des figures 2 et 3 (la face interne 211 du canal 212 présente une géométrie cylindrique, à l'instar de la figure 3).

Dans cet exemple de la figure 5, ledit ratio R est égal à 0,47.

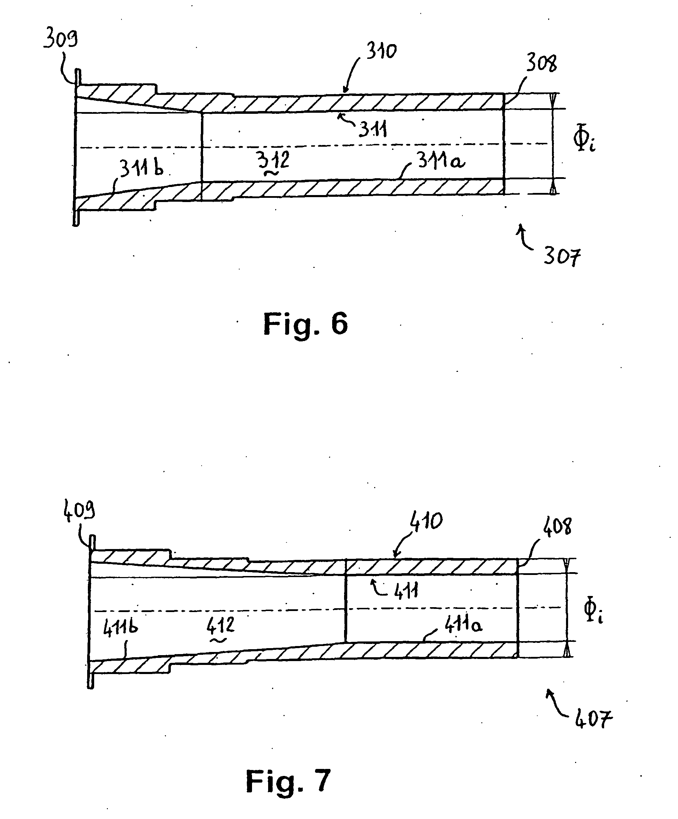

Le dispositif réducteur de bruit 307 selon le second exemple du second mode de réalisation de l'invention qui est illustré à la figure 6 se différencie uniquement du dispositif 207 précité de la figure 5, en ce que sa face interne 311 comprend, de sa face d'entrée 308 à sa face de sortie 309, outre un tronçon cylindrique 311 a analogue à celui de la figure 5, un tronçon divergent tronconique 311 b qui prolonge le tronçon 311 a jusqu'à la face de sortie 309 et qui présente une longueur plus réduite que celle du tronçon 311a.

Dans l'exemple de la figure 6, le ratio R [section de passage minimale du canal 312 / section transversale de la portion 310] est de 0,47.

Le dispositif réducteur de bruit 407 selon le troisième exemple du second mode de réalisation de l'invention qui est illustré à la figure 7 se différencie uniquement du dispositif 307 précité de la figure 6, en ce que sa face interne 411 comprend, de sa face d'entrée 408 à sa face de sortie 409, outre un tronçon cylindrique 411 a analogue à celui de la figure 6, un tronçon divergent tronconique 411 b qui prolonge le tronçon 411 a jusqu'à la face de sortie 409 mais qui présente une longueur plus grande que celle du tronçon 411 a, contrairement à la figure 6.

Dans l'exemple de la figure 7, le ratio R [section de passage minimale du canal 412 / section transversale de la portion 410] est de 0,47.

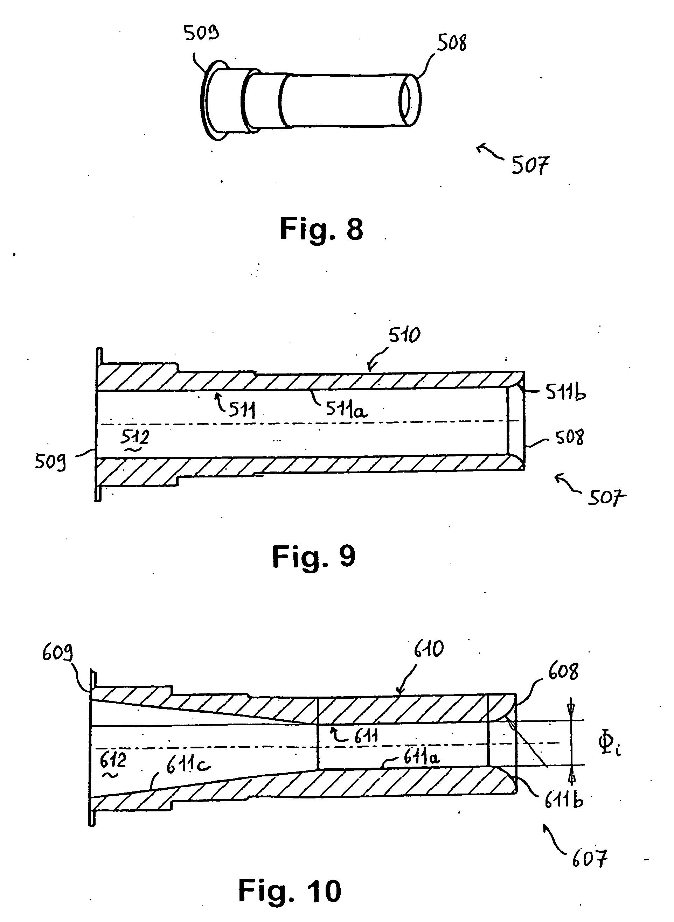

Le dispositif réducteur de bruit 507 selon le premier exemple du troisième mode de réalisation de l'invention qui est illustré aux figures 8 et 9 se différencie uniquement du dispositif 207 précité de la figure 5, en ce que sa face interne 511 comprend, de sa face de sortie 509 à sa face d'entrée 508, outre un tronçon cylindrique 511a analogue à celui de la figure 5, un tronçon convergent 511 b sensiblement en forme d'hyperboloïde de révolution qui prolonge le tronçon 511a jusqu'à la face d'entrée 508 sur une longueur très réduite.

Dans l'exemple de la figure 9, le ratio R [section de passage minimale du canal 512 / section transversale de la portion 510] est de 0,47.

Le dispositif réducteur de bruit 607 selon le second exemple du troisième mode de réalisation de l'invention qui est illustré à la figure 10 se différencie uniquement du dispositif 507 précité de la figure 9, en ce que sa face interne 611 comprend, de sa face d'entrée 608 à sa face de sortie 609, outre un tronçon convergent 611 b sensiblement en forme d'hyperboloïde de révolution se prolongeant par un tronçon cylindrique 611a, un tronçon divergent 611 c qui prolonge ce tronçon 611 a jusqu'à la face de sortie 609 sur une longueur sensiblement égale à celle du tronçon 611a.

Dans l'exemple de la figure 10, le ratio R [section de passage minimale du canal 612 / section transversale de la portion 610] est de 0,20.

Des essais réalisés par la Demanderesse avec les dispositifs 107 à 607 selon l'invention ont montré que le rétrécissement de la section de passage défini par ces ratios R, combiné à un montage du dispositif 107 à 607 directement en sortie du compresseur 2, permet d'atténuer d'une manière significative les ondes sonores à l'intérieur du circuit de climatisation. Ces essais ont montré en outre que les tronçons convergents et/ou divergents 311b, 411b, 511b, 611b et 611 c, qui concernent spécifiquement les faces internes respectives 311 à 611 des dispositifs 307 à 607, permettrent en outre d'atténuer les pertes de charge dues aux rétrécissements correspondants de la section de passage.

A l'instar du dispositif 107 précité, les autres dispositifs 207 à 607 selon l'invention sont chacun avantageusement montés à une extrémité de la conduite 6' de la ligne basse pression 6, 6' qui est raccordée au compresseur 2, de sorte qu'ils soient chacun montés directement à l'aspiration du compresseur 2, ou bien à une extrémité de la conduite 8' de la ligne haute pression 8, 8' qui est raccordée au compresseur 2, de sorte qu'ils soient chacun montés directement sur le refoulement de ce compresseur 2.

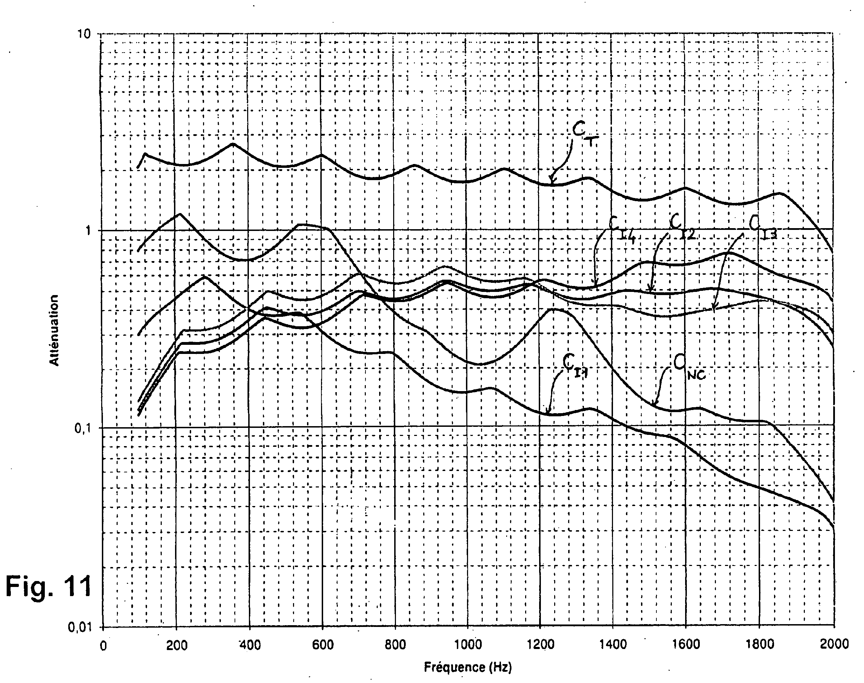

Le graphique de la figure 11 illustre les résultats comparatifs d'essais acoustiques obtenus (coefficient adimensionnel d'atténuation acoustique en ordonnée, et fréquences en Hz en abscisse), pour :
- un circuit de climatisation « témoin » tel que celui illustré à la figure 1 mais dépourvu de tout dispositif réducteur de bruit (courbe C_{T}) ;
- un circuit de climatisation 1 connu tel que celui de la figure 1 et pourvu de la capacité acoustique 7 à titre de dispositif réducteur de bruit non conforme à l'invention, cette capacité étant relativement éloignée du compresseur 2 (courbe C_{NC}) ;
- un circuit de climatisation selon l'invention tel que celui de la figure 1 mais pourvu, dans la conduite 6' de la ligne basse pression 6, 6' et directement à l'aspiration du compresseur 2, du dispositif réducteur de bruit 107 de la figure 3 avec un diamètre Φᵢ de la face interne 111 égal à 3,4 mm (courbe C_{I1}) ;
- un circuit de climatisation selon l'invention tel que celui de la figure 1 mais pourvu, dans cette conduite 6' et directement à l'aspiration du compresseur 2, du dispositif réducteur de bruit 107 de la figure 3 avec un diamètre Φᵢ de la face interne 111 égal à 7,6 mm (courbe C_{I2}) ;
- un circuit de climatisation selon l'invention tel que celui de la figure 1 mais pourvu, dans cette conduite 6' et directement à l'aspiration du compresseur 2, du dispositif réducteur de bruit 107 de la figure 3 avec un diamètre Φᵢ de la face interne 111 égal à 8,4 mm (courbe C_{I3}) ; et
- un circuit de climatisation selon l'invention tel que celui de la figure 1 mais pourvu, dans cette conduite 6' et directement à l'aspiration du compresseur 2, du dispositif réducteur de bruit 607 de la figure 10 avec un diamètre Φᵢ de la face interne 611 égal à 5,5 mm (courbe C_{I4}).

Ce graphique montre clairement que l'incorporation à l'aspiration du compresseur des dispositifs 107 ou 607 selon l'invention à un circuit de climatisation (cf. courbes C_{I1}, C_{I2}, C_{I3} et C_{I4}) permet de réduire d'une manière très significative le bruit généré par le compresseur et se propageant dans les conduites de ce circuit, en comparaison d'un tel circuit dépourvu de dispositif réducteur de bruit (cf. courbe C_{T}).

Ce graphique montre également que l'incorporation à l'aspiration du compresseur du dispositif 107 selon l'invention ayant un diamètre Φᵢ minimal de 3,4 mm à un circuit de climatisation permet de minimiser les ondes sonores dans ce circuit (cf. courbe C₁₁) en comparaison d'un circuit connu incorporant une capacité acoustique à la place de ce dispositif 107 et à distance du compresseur (cf. courbe C_{NC}).

Ce graphique montre en outre que l'incorporation à l'aspiration du compresseur des dispositifs 107 ou 607 selon l'invention ayant un diamètre Φᵢ supérieur - 5,5 mm à 8,4 mm - à un circuit de climatisation permet :
- dans une plage de fréquences allant de 50 Hz à 750 Hz, de minimiser les ondes sonores dans ce circuit (cf. courbes C₁₂ à C₁₄) en comparaison de ce même circuit connu incorporant cette capacité acoustique (cf. courbe C_{NC}) et, pour des fréquences supérieures à 750 Hz, de procurer une atténuation acoustique satisfaisante en comparaison de celle de ce circuit connu, et en même temps,
- de réduire dans une mesure significative les pertes de charge dues au rétrécissement de la section de passage du fluide dans les dispositifs 107 ou 607, étant précisé que les meilleurs résultats d'atténuation des pertes de charge sont obtenus avec le dispositif 607 qui est caractérisé par ses tronçons axiaux 611 b et 611 c respectivement convergent et divergent de la face d'entrée 608 à la face de sortie 609 pour le fluide.

On notera que ces conclusions s'appliqueraient également au montage d'un dispositif selon l'invention sur le refoulement du compresseur 2, dans la conduite 8' de la ligne haute pression 8, 8'.

## Revendications

1. Conduite (6') pour fluide frigorigène gazeux ou supercritique et sous pression d'un circuit de climatisation pour véhicule automobile, un dispositif réducteur de bruit (107, 207, 307, 407, 507, 607) étant inséré dans l'espace interne de la conduite en étant monté au contact de la paroi de cette conduite et présentant une géométrie au moins en partie tubulaire délimitée par deux faces transversales respectivement d'entrée et de sortie (108 et 109, 208 et 209, 308 et 309, 408 et 409, 508 et 509, 608 et 609) dudit fluide formant entre elles au moins un canal axial (112, 212, 312, 412, 512, 612) de passage dudit fluide dans ledit dispositif et par une face radialement externe (110, 210, 310, 410, 510, 610) qui relie lesdites faces d'entrée et de sortie entre elles, **caractérisée en ce que** ladite face externe du dispositif est au moins en partie cylindrique et épouse ladite paroi de conduite, le ratio entre la section de passage minimale dudit canal ou de l'ensemble desdits canaux et la section transversale minimale de ladite face externe étant compris entre 0,05 et 0,75.

2. Conduite (6') selon la revendication 1, **caractérisée en ce que** ledit ratio est compris entre 0,20 et 0,50.

3. Conduite (6') selon la revendication 1 ou 2, **caractérisée en ce que** ledit ou chaque canal (112, 212, 312, 412, 512, 612) est délimité par une face radialement interne (111, 211, 311, 411, 511, 611) dudit dispositif qui présente une section transversale circulaire et qui s'étend de l'une desdites faces d'entrée et de sortie (108 et 109, 208 et 209, 308 et 309, 408 et 409, 508 et 509, 608 et 609) à l'autre.

4. Conduite (6') selon la revendication 3, **caractérisée en ce que** ladite face interne (111, 211, 311, 411, 511, 611) comprend au moins un tronçon axial cylindrique (211, 311a, 411a, 511a, 611a) entre lesdites faces d'entrée et de sortie (108 et 109, 208 et 209, 308 et 309, 408 et 409, 508 et 509, 608 et 609).

5. Conduite (6') selon la revendication 3 ou 4, **caractérisée en ce que** ladite face interne (311, 411, 511, 611) comprend au moins un tronçon axial convergent (511b, 611b) et/ou au moins un tronçon axial divergent (311 b, 411 b, 611 c) débouchant sur ladite face d'entrée (308, 408, 508, 608) et/ou sur ladite face de sortie (309, 409, 509, 609), respectivement, dans un sens de passage déterminé dudit fluide dans ledit ou chaque canal (312, 412, 512, 612).

6. Conduite (6') selon les revendications 4 et 5, **caractérisée en ce que** ladite face interne (611) comprend successivement, de ladite face d'entrée (608) à ladite face de sortie (609), un premier tronçon axial convergent (611b), un second tronçon axial cylindrique (611a) et un troisième tronçon axial divergent (611c), la longueur dudit premier tronçon étant réduite en comparaison de celles desdits second et troisième tronçons.

7. Conduite (6') selon une des revendications précédentes, **caractérisée en ce que** ledit dispositif (107, 207, 307, 407, 507, 607) comporte, à proximité de ladite face de sortie (109, 209, 309, 409, 509, 609), une collerette (110b, 210c) qui définit une section transversale élargie pour ladite face externe (110, 210, 310, 410, 510, 610) et qui est montée au contact d'une extrémité correspondante de ladite conduite (6').

8. Conduite (6') selon la revendication 7, **caractérisée en ce que** ladite collerette (110b, 210c) se termine par une embase transversale (110c, 210d) formant ladite face de sortie (109, 209, 309, 409, 509, 609) dudit dispositif.

9. Conduite (6') selon une des revendications précédentes, **caractérisée en ce que** ladite face d'entrée (108, 208, 308, 408, 508, 608) et/ou ladite face de sortie (109, 209, 309, 409, 509, 609) sont chacune pourvues d'une unique ouverture formant une extrémité correspondante dudit ou chaque canal (112, 212, 312, 412, 512, 612).

10. Conduite (6') selon une des revendications 1 à 8, **caractérisée en ce que** ladite face d'entrée et/ou ladite face de sortie sont chacune pourvues d'une pluralité d'ouvertures sur lesquelles débouche ledit ou chaque canal (112, 212, 312, 412, 512, 612).

11. Conduite (6') selon une des revendications précédentes, **caractérisée en ce que** ladite section de passage minimale dudit canal ou de l'ensemble desdits canaux (112, 212, 312, 412, 512, 612) présente une aire comprise entre 4,9 mm² et 79 mm².

12. Conduite (6') selon une des revendications précédentes, **caractérisée en ce que** ladite section transversale minimale de ladite face externe (110, 210, 310, 410, 510, 610) présente une aire comprise entre 26,4 mm² et 201 mm².

13. Conduite (6') selon une des revendications précédentes, **caractérisée en ce que** ledit dispositif (107, 207, 307, 407, 507, 607) présente une longueur axiale comprise entre 25 mm et 150 mm.

14. Conduite (6') selon une des revendications précédentes, **caractérisée en ce que** ledit dispositif (107, 207, 307, 407, 507, 607) est à base d'un matériau déformable, tel qu'un caoutchouc, pour épouser une forme coudée ou cintrée de ladite conduite (6').

15. Conduite (6') selon une des revendications précédentes, **caractérisée en ce que** le ratio entre la section de passage minimale dudit canal ou de l'ensemble desdits canaux (112, 212, 312, 412, 512, 612) et la section transversale interne minimale de ladite paroi de conduite est compris entre 0,05 et 0,60.

16. Conduite (6') selon la revendication 15, **caractérisée en ce que** le ratio entre la section de passage minimale dudit canal ou de l'ensemble desdits canaux (112, 212, 312, 412, 512, 612) et la section transversale interne minimale de ladite paroi de conduite est compris entre 0,20 et 0,50.

17. Circuit de climatisation (1) pour véhicule automobile, du type comportant des conduites (6, 6') destinées à véhiculer un fluide frigorigène gazeux sous pression entre un compresseur (2) et un évaporateur (4), et un dispositif réducteur de bruit (107, 207, 307, 407, 507, 607) inséré dans au moins l'une desdites conduites (6'), **caractérisé en ce que** la conduite dans laquelle est inséré ledit dispositif est telle que définie à l'une des revendications précédentes.

18. Circuit de climatisation (1) selon la revendication 17, **caractérisé en ce que** ladite conduite (6') dans laquelle est inséré ledit dispositif (107, 207, 307, 407, 507, 607) est raccordée directement à l'aspiration ou au refoulement dudit compresseur (2), respectivement dans une ligne basse pression (6, 6') ou dans une ligne haute pression (8, 8') dudit circuit.

19. Circuit de climatisation (1) selon la revendication 18, **caractérisé en ce que** ledit dispositif (107, 207, 307, 407, 507, 607) est monté à l'extrémité de ladite conduite (6') qui débouche sur ladite aspiration ou sur ledit refoulement du compresseur (2), respectivement dans ladite ligne basse pression (6, 6') ou dans ladite ligne haute pression (8, 8').

## Claims

1. Conduit (6') for pressurised gaseous or supercritical refrigerant fluid of a motor vehicle air-conditioning circuit, a noise-reduction device (107, 207, 307, 407, 507, 607) being inserted in the internal space of the conduit and mounted in contact with the wall of this conduit and having a geometry which is at least in part tubular delimited by two transverse faces (108 and 109, 208 and 209, 308 and 309, 408 and 409, 508 and 509, 608 and 609) respectively for the inlet and outlet of said fluid forming between them at least an axial flow channel (112, 212, 312, 412, 512, 612) for said fluid in said device and by a radially external face (110, 210, 310, 410, 510, 610) which connects said inlet and outlet faces to one another, **characterised in that** said external face of the device is in least in part cylindrical and fits to said conduit wall, the ratio between the minimum flow area of said channel or all of said channels and the minimum cross section of said external face being between 0.05 and 0.75.

2. Conduit (6') according to claim 1, **characterised in that** said ratio is between 0.20 and 0.50.

3. Conduit (6') according to claim 1 or claim 2, **characterised in that** said or each channel (112, 212, 312, 412, 512, 612) is delimited by a radially internal face (111, 211, 311, 411, 511, 611) of said device which has a circular cross section and which extends from one of said inlet and outlet faces (108 and 109, 208 and 209, 308 and 309, 408 and 409, 508 and 509, 608 and 609) to the other.

4. Conduit (6') according to claim 3, **characterised in that** said internal face (111,211,311,411,511,611) comprises at least a cylindrical axial portion (211, 311 a, 411 a, 511 a, 611 a) between said inlet and outlet faces (108 and 109, 208 and 209, 308 and 309, 408 and 409, 508 and 509, 608 and 609).

5. Conduit (6') according to either claim 3 or claim 4, **characterised in that** said internal face (311, 411, 511, 611) comprises at least a convergent axial portion (511 b, 611 b) and/or at least a divergent axial portion (311 b, 411 b, 611 c) opening onto said inlet face (308, 408, 508, 608) and/or said outlet face (309, 409, 509, 609), respectively, in a specific flow direction of said fluid in said or each channel (312, 412, 512, 612).

6. Conduit (6') according to claims 4 and 5, **characterised in that** said internal face (611) successively comprises, from said inlet face (608) to said outlet face (609), a first convergent axial portion (611 b), a second cylindrical axial portion (611a) and a third divergent axial portion (611c), the length of said first portion being shorter in comparison with the lengths of said second and third portions.

7. Conduit (6') according to any one of the preceding claims, **characterised in that** said device (107, 207, 307, 407, 507, 607) comprises, near to said outlet face (109, 209, 309, 409, 509, 609), a collar (110b, 210c) which defines a widened cross section for said external face (110, 210, 310, 410, 510, 610) and which is mounted in contact with a corresponding end of said conduit (6').

8. Conduit (6') according to claim 7, **characterised in that** said collar (110b, 210c) ends in a transverse flange (110c, 210d) forming said outlet face (109, 209, 309, 409, 509, 609) of said device.

9. Conduit (6') according to any one of the preceding claims, **characterised in that** said inlet face (108, 208, 308, 408, 508, 608) and/or said outlet face (109, 209, 309, 409, 509, 609) are each provided with a single opening forming a corresponding end of said or each channel (112, 212, 312, 412, 512, 612).

10. Conduit (6') according to any one of claims 1 to 8, **characterised in that** said inlet face and/or said outlet face are each provided with a plurality of openings into which said or each channel (112, 212, 312, 412, 512, 612) opens.

11. Conduit (6') according to any one of the preceding claims, **characterised in that** said minimum flow area of said channel or of all of said channels (112, 212, 312, 412, 512, 612) has an area of between 4.9 mm² and 79 mm².

12. Conduit (6') according to any one of the preceding claims, **characterised in that** said minimum cross section of said external face (110, 210, 310, 410, 510, 610) has an area of between 26.4 mm² and 201 mm².

13. Conduit (6') according to any of the preceding claims, **characterised in that** said device (107, 207, 307, 407, 507, 607) has an axial length of between 25 mm and 150 mm.

14. Conduit (6') according to any one of the preceding claims, **characterised in that** said device (107, 207, 307, 407, 507, 607) is made from a deformable material, such as rubber, to fit to a curved or bent form of said conduit (6').

15. Conduit (6') according to any one of the preceding claims, **characterised in that** the ratio between the minimum cross section of said channel or all of said channels (112, 212, 312, 412, 512, 612) and the minimum internal cross section of said conduit wall is between 0.05 and 0.60.

16. Conduit (6') according to claim 15, **characterised in that** the ratio between the minimum cross section of said channel or all of said channels (112, 212, 312, 412, 512, 612) and the minimum internal cross section of said conduit wall is between 0.20 and 0.50.

17. Motor vehicle air-conditioning circuit (1) of the type comprising conduits (6, 6') intended to transport a pressurised gaseous refrigerant fluid between a compressor (2) and an evaporator (4), and a noise-reduction device (107, 207, 307, 407, 507, 607) inserted into at least one of said conduits (6'), **characterised in that** the conduit into which said device is inserted is as defined in any one of the preceding claims.

18. Air-conditioning circuit (1) according to claim 17, **characterised in that** said conduit (6) into which said device (107, 207, 307, 407, 507, 607) is inserted is directly connected to the suction or to the discharge of said compressor (2), respectively in a low pressure line (6, 6') or in a high pressure line (8, 8') of said circuit.

19. Air-conditioning circuit (1) according to claim 18, **characterised in that** said device (107, 207, 307, 407, 507, 607) is mounted on the end of said conduit (6') which opens onto said suction or onto said discharge of the compressor (2), respectively in said low pressure line (6, 6') or in said high pressure line (8, 8').

## Patentansprüche

1. Leitung (6') für ein gasförmiges oder überkritisches und druckbeaufschlagtes Kältemittel eines Klimatisierungskreislaufs eines Kraftfahrzeugs, wobei ein Schalldämpfer (107, 207, 307, 407, 507, 607) ins Innere der Leitung eingeführt ist, indem er in Kontakt mit der Wand dieser Leitung befestigt ist, und eine wenigstens teilweise rohrförmige Geometrie aufweist, die durch eine Eintritts- und eine Austrittsfläche (108 bzw. 109, 208 bzw. 209, 308 bzw. 309, 408 bzw. 409, 508 bzw. 509, 608 bzw. 609) des Fluids, die zwischen sich wenigstens einen axialen Durchtrittskanal (112, 212, 312, 412, 512, 612) des Fluids in der Vorrichtung bilden, und durch eine radial äußere Oberfläche (110, 210, 310, 410, 510, 610), die die Eintritts- und Austrittsflächen miteinander verbindet, begrenzt ist, **dadurch gekennzeichnet, dass** die äußere Oberfläche der Vorrichtung wenigstens teilweise zylindrisch ist und die Leitungswand bildet, wobei das Verhältnis zwischen dem minimalen Strömungsquerschnitt des Kanals oder der Anordnung der Kanäle und dem minimalen Querschnitt der äußeren Oberfläche zwischen 0,05 und 0,75 liegt.

2. Leitung (6') nach Anspruch 1, **dadurch gekennzeichnet, dass** das Verhältnis zwischen 0,20 und 0,50 liegt.

3. Leitung (6') nach Anspruch 1 oder 2, **dadurch gekennzeichnet, dass** der oder jeder Kanal (112, 212, 312, 412, 512, 612) durch eine radial innere Oberfläche (111, 211, 311, 411, 511, 611) der Vorrichtung begrenzt ist, die einen kreisförmigen Querschnitt aufweist und sich von einer der Eintritts- und Austrittsflächen (108 und 109, 208 und 209, 308 und 309, 408 und 409, 508 und 509, 608 und 609) zu der weiteren erstreckt.

4. Leitung (6') nach Anspruch 3, **dadurch gekennzeichnet, dass** die innere Oberfläche (111, 211, 311, 411, 511, 611) wenigstens ein axiales, zylindrisches Teilstück (211, 311a, 411a, 511a, 611a) zwischen der Eintritts- und Austrittsflächen (108 und 109, 208 und 209, 308 und 309, 408 und 409, 508 und 509, 608 und 609) aufweist.

5. Leitung (6') nach Anspruch 3 oder 4, **dadurch gekennzeichnet, dass** die innere Oberfläche (311, 411, 511, 611) wenigstens ein axiales, sich verjüngendes Teilstück (511b, 611b) und/oder wenigstens ein axiales, sich weitendes Teilstück (311 b, 411 b, 511 b) umfasst, die zu der Eintrittsfläche (308, 408, 508, 608) und/oder der Austrittsfläche (309, 409, 509, 609) führen, und zwar in einer vorbestimmten Durchtrittsrichtung des Fluids in dem oder jedem Kanal (312, 412, 512, 612).

6. Leitung (6') nach Anspruch 4 und 5, **dadurch gekennzeichnet, dass** die innere Oberfläche (611), aufeinanderfolgend von der Eintrittsfläche (608) zu der Austrittsfläche (609), ein erstes axiales, sich verjüngendes Teilstück (611 b), ein zweites axiales, zylindrisches Teilstück (611a) und ein drittes axiales, sich weitendes Teilstück (611c) umfasst, wobei die Länge des ersten Teilstücks im Vergleich zu denjenigen des zweiten und dritten Teilstücks geringer ist.

7. Leitung (6') nach einem der vorherigen Ansprüche, **dadurch gekennzeichnet, dass** die Vorrichtung (107, 207, 307, 407, 507, 607) in der Nähe der Austrittsfläche (109, 209, 309, 409, 509, 609) einen Kragen (110b, 210c) besitzt, der einen größeren Querschnitt als die äußere Oberfläche (110, 210, 310, 410, 510, 610) definiert und der in Kontakt mit einem entsprechenden Ende der Leitung (6') befestigt ist.

8. Leitung (6') nach Anspruch 7, **dadurch gekennzeichnet, dass** der Kragen (110b, 210c) durch einen Quersockel (110c, 210d) angeschlossen ist, der die Austrittsfläche (109, 209, 309, 409, 509, 609) des oder jedes Kanals (112, 212, 312, 412, 512, 612) bildet.

9. Kanal (6') nach einem der vorherigen Ansprüche, **dadurch gekennzeichnet, dass** die Eintrittsfläche (108, 208, 308, 408, 508, 508) und/oder die Austrittsfläche (109, 209, 309, 409, 509, 609) jeweils mit einer einzigen Öffnung versehen sind, die ein entsprechendes Ende des oder jedes Kanals (112, 212, 312, 412, 512, 612) bildet.

10. Leitung (6') nach einem der Ansprüche 1 bis 8, **dadurch gekennzeichnet, dass** die Eintrittsfläche und/oder die Austrittsfläche jeweils mit einer Mehrzahl von Öffnungen versehen sind, zu denen der oder jeder Kanal (112, 212, 312, 412, 512, 612) führt.

11. Leitung (6') nach einem der vorherigen Ansprüche, **dadurch gekennzeichnet, dass** der minimale Strömungsquerschnitt des Kanals oder der Anordnung der Kanäle (112, 212, 312, 412, 512, 612) eine Fläche aufweist, die zwischen 4,9 mm² und 79 mm² beträgt.

12. Leitung (6') nach einem der vorherigen Ansprüche, **dadurch gekennzeichnet, dass** der minimale Querschnitt der inneren Oberfläche (110, 210, 3310, 410, 510, 610) eine Fläche aufweist, die zwischen 26,4 mm² und 201 mm² beträgt.

13. Leitung (6') nach einem der vorherigen Ansprüche, **dadurch gekennzeichnet, dass** die Vorrichtung (107, 207, 307, 407, 507, 607) eine Länge zwischen 25 mm und 150 mm besitzt.

14. Leitung (6') nach einem der vorherigen Ansprüche, **dadurch gekennzeichnet, dass** die Vorrichtung (107, 207, 307, 407, 507, 607) aus einem verformbaren Material wie etwa Gummi hergestellt ist, um der Leitung (6') eine gewinkelte oder gekrümmte Form zu verleihen.

15. Leitung (6') nach einem der vorherigen Ansprüche, **dadurch gekennzeichnet, dass** das Verhältnis zwischen dem minimalen Strömungsquerschnitt des Kanals oder der Anordnung der Kanäle (112, 212, 312, 412, 512, 612) und der minimale innere Querschnitt der Leitungswand zwischen 0,05 und 0,60 beträgt.

16. Leitung (6') nach Anspruch 15, **dadurch gekennzeichnet, dass** das Verhältnis zwischen dem minimalen Strömungsquerschnitt des Kanals oder der Anordnung der Kanäle (112, 212, 312, 412, 512, 612) und dem minimalen inneren Querschnitt der Leitungswand zwischen 0,20 und 0,50 beträgt.

17. Klimatisierungskreislauf (1) für ein Kraftfahrzeug vom Typ mit den Leitungen (6, 6') zum Transportieren eines gasförmigen, druckbeaufschlagten Kältemittels zwischen einem Kompressor (2) und einem Verdampfer (4) und einem Schalldämpfer (107, 207, 307, 407, 507, 607), der in wenigstens eine der Leitungen (6') eingeführt ist, **dadurch gekennzeichnet, dass** die Leitung, in der die Vorrichtung eingeführt ist, so ist, wie es in einem der vorherigen Ansprüche definiert ist.

18. Klimatisierungskreislauf (1) nach Anspruch 17, **dadurch gekennzeichnet, dass** die Leitung (6'), in der die Vorrichtung (107, 207, 307, 407, 507, 607) eingeführt ist, direkt mit der Saugseite oder mit der Verdichtungsseite des Kompressors (2) verbunden ist, und zwar in einer Niederdruckleitung (6, 6') oder in einer Hochdruckleitung (8, 8').

19. Klimatisierungskreislauf (1) nach Anspruch 18, **dadurch gekennzeichnet, dass** die Vorrichtung (107, 207, 307, 407, 507, 607) an dem Ende der Leitung (6') befestigt ist, die zu der Saugseite oder der Verdichtungsseite des Kompressors (2) führt, und zwar in einer Niederdruckleitung (6, 6') oder in einer Hochdruckleitung (8, 8').
